(19) Europäisches Patentamt
European Patent Office
Office européen des brevets

(11) **EP 2 739 921 B1**

(12) **EUROPEAN PATENT SPECIFICATION**

(45) Date of publication and mention
of the grant of the patent:
**09.10.2019 Bulletin 2019/41**

(51) Int Cl.:
***F25B 27/02*** *(2006.01)*

(21) Application number: **12761673.8**

(86) International application number:
**PCT/IB2012/053964**

(22) Date of filing: **02.08.2012**

(87) International publication number:
**WO 2013/021323 (14.02.2013 Gazette 2013/07)**

(54) **HEAT PUMP SYSTEM AND METHOD OF COOLING AND/OR HEATING BY MEANS OF SAID SYSTEM**

WÄRMEPUMPENSYSTEM UND VERFAHREN ZUM KÜHLEN UND/ODER HEIZEN MITTELS DIESES SYSTEMS

SYSTÈME DE POMPE À CHALEUR ET PROCÉDÉ DE REFROIDISSEMENT ET/OU DE CHAUFFAGE UTILISANT LEDIT SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2011 IT TO20110732**

(43) Date of publication of application:
**11.06.2014 Bulletin 2014/24**

(73) Proprietor: **TEON S.R.L.**
**20900 Monza (IT)**

(72) Inventor: **PELLEGRINI, Gianfranco**
**10137 Torino (IT)**

(74) Representative: **Cinquantini, Bruno et al**
**Notarbartolo & Gervasi S.p.A.**
**Corso di Porta Vittoria, 9**
**20122 Milano (IT)**

(56) References cited:
**DE-C- 386 863      JP-A- 2010 243 082**
**US-A- 4 285 211**

**Description**

Field of the invention

The present invention relates to a heat pump system and to a method of cooling and/or heating by means of said system.

Prior art

The heat pumps for cooling and/or heating environments and/or liquids that are nowadays in widespread use in principle fall into one of two categories: compression heat pumps and absorption heat pumps.

In compression heat pumps, an operating fluid in the vapour state is compressed to raise it to a higher cycle pressure. Then the compressed operating fluid condenses at least partially, giving off heat, at a condenser where a heat exchange takes place with an environment or a fluid at a higher cycle temperature.

Subsequently, the condensed operating fluid is expanded to bring it to a lower cycle pressure. Finally, the expanded operating fluid evaporates, by absorbing heat, at an evaporator where a heat exchange takes place with an environment or a fluid at a lower cycle temperature, and thus returns to the aspiration conditions of the compressor.

In absorption heat pumps, instead, two fluids operate. The latter are capable of forming a homogenous solution in the liquid phase: a fluid at a higher vapour pressure, which operates as the operating fluid and normally represents the solute, and an auxiliary fluid at a lower vapour pressure, which normally represents the solvent. The most common operating fluid-auxiliary fluid pairs consist respectively of water and lithium bromide ($H_2O$-LiBr) or ammonia and water ($NH_3$-$H_2O$).

In an absorption heat pump, the operating fluid completes a part of the heat pump cycle, in particular the compression phase, in liquid solution with the auxiliary fluid.

In particular, in an absorption heat pump the liquid solution containing the operating fluid is pumped at a higher pressure of the cycle, and is therefore sent to a device - generally referred to by the term "generator" - in which at least one fraction of the operating fluid is separated from the solution by supplying heat.

Thereafter, analogously to what happens in a compression cycle, the separated operating fluid, in the vapour state, at least partially condenses, giving off heat, at a condenser where a heat exchange takes place with an environment or a fluid at a higher cycle temperature. Then the condensed operating fluid is expanded to bring it to a lower cycle pressure. Subsequently the expanded operating fluid at least partially evaporates, by absorbing heat, at an evaporator where a heat exchange takes place with an environment or a fluid at a lower cycle temperature.

Finally, the evaporated operating fluid is sent to a device - generally referred to by the term "absorber" - in which said operating fluid again goes into solution with the impoverished solution containing the auxiliary fluid, coming from the generator.

Whereas in compression heat pumps the energy entering the cycle, which energy is necessary for compression of the operating fluid in the vapour state, is supplied in the form of electrical/mechanical energy, in absorption heat pumps most of the energy entering the cycle - that is to say, the energy supplied at the generator for separating the operating fluid from the solution, being comparatively negligible the energy required for pumping the liquid solution to the higher pressure - is supplied in the form of thermal energy. This thermal energy is made available either purposively, in general by burning a fuel in a boiler, or by recovering waste heat deriving from a prime mover or from other processes in which it is available at a suitable temperature.

In addition to the very low electrical energy requirement of absorption heat pumps, which is in all cases negligible by comparison with compression heat pumps since they have few moving parts, the absorption heat pumps also have advantages over compression heat pumps that are linked to good performance at partial loads, good reliability and long useful life, low noise and the substantial absence of vibrations.

However, absorption heat pumps have coefficients of performance (COPs) that are appreciably lower than those now typical of compression heat pumps of equal potentiality. For example, with single-stage absorption heat pumps operating with $H_2O$-LiBr, values of COP - understood as the ratio between the thermal energy supplied and the refrigeration or thermal energy produced - between 0.6 and 1.4 can be achieved, depending on the temperature at which the thermal energy is supplied to the generator.

Compression heat pumps and absorption heat pumps can be used in cooling and/or heating installations both singly and in combination.

A combined use of a compression heat pump and an absorption heat pump is known for example from JP 2004101035 A and US 4,471,630.

These documents disclose cooling systems comprising a compression heat pump unit and an absorption heat pump unit having a heat exchange relationship with a consumer circuit. For the purpose of improving the heat exchange with the consumer circuit and/or of improving the working at partial loads, various methods of connecting the two heat pump units to the consumer circuit are proposed that are substantially ascribable to connection of these units in series or in parallel with respect to the consumer circuit. In all cases, the two heat pump units are present as distinct units, hydraulically and thermally independent of one another.

Due to the combined use of compression heat pumps and absorption heat pumps, systems of the above-mentioned type enable improvements in flexibility of use where there are heat consumers of differing type, as well as in performances at partial loads. However, these systems have relatively low overall efficiency, in particular when the thermal energy to be supplied to the absorption heat pump is not available as waste heat and must therefore be made available purposively.

Consequently, taking into account the higher costs and greater complexity from the installation point of view, these systems may in practice be uncompetitive as compared with solutions using a single type of heat pump.

Furthermore, the presence of two physically distinct heat pump units together causes problems of bulkiness in the above-mentioned systems which limit the possibility of their use.

Document US 4 285 211 A discloses a compressor-assisted absorption refrigeration system.

More specifically, the present invention relates to a heat pump system according to the preamble of Claim 1, which is known, e.g. from JP 2010 243082A.

Summary of the invention

The technical problem underlying the present invention consists in providing a heat pump system which allows a synergistic exploitation of the advantageous characteristics typical of absorption heat pumps - or, more generally, heat pumps in which the operating fluid during one part of the thermodynamic cycle is combined with at least one auxiliary substance so as to form a material system therewith, which heat pumps are referred to in what follows, for the sake of brevity, as "combined heat pumps" - and of compression heat pumps. In particular, it is needed a heat pump system which is capable of satisfying, also simultaneously, a plurality of heat consumers having different requirements in terms of the demand for refrigerating/thermal power and of operating temperatures, and/or of operating under conditions of partial load by sustaining, at the same time, high values of COP.

A further problem dealt with by the present invention consists in providing a heat pump system having the above-mentioned characteristics which is also as compact as possible.

Within the scope of the present description and of the claims which follow, the expression "material system" is used to refer to a group of substances which, within specified intervals of temperature and pressure, show a substantially uniform behaviour, in particular with respect of their transportation within the heat pump circuit. The material system, just like the at least one auxiliary substance which together with the operating fluid form part thereof, may be present in the form of a fluid or solid. In particular, the material system may be a solution or a liquid mixture of the operating fluid with said at least one auxiliary substance -as in the absorption heat pumps- or a system formed by the absorption of the operating fluid in a solid matrix, as in the heat pumps or absorption refrigerators.

The Applicant has noted that the above-mentioned problems can be resolved by means of a system adapted to simultaneously carry out a combined heat pump cycle and a compression heat pump cycle, thermally coupled with one another.

In particular, in a first aspect, the invention relates to a heat pump system comprising:

- a first hydraulic circuit suitable to carry out a heat pump cycle with a first operating fluid which, during a part of said cycle, is combined with at least one auxiliary substance so as to form a material system therewith, said first hydraulic circuit comprising:

  - a first treatment device for said material system, in correspondence of which at least a fraction of the first operating fluid is separated from said material system;
  - a first condenser, in correspondence of which the first operating fluid which has been separated at least partially condenses by releasing heat;
  - a first evaporator, in correspondence of which the first operating fluid which has been condensed at least partially evaporates, by absorbing heat, and
  - a second treatment device for said material system, in correspondence of which the first operating fluid which has been evaporated is again incorporated in said material system;

- a second hydraulic circuit suitable to carry out a compression heat pump cycle with a second operating fluid, said second circuit comprising:

  - a second condenser, in correspondence of which said second operating fluid at least partially condenses, by releasing heat, and

- a second evaporator, in correspondence of which said second operating fluid evaporates, by absorbing heat,

wherein said second condenser is thermally coupled with said first treatment device so as to transfer the heat released from said second operating fluid in correspondence of said second condenser to said first treatment device for separating said at least one fraction of the first operating fluid from said material system,
wherein said material system is a liquid solution;
wherein at said first treatment device (10) at least a fraction of said first operating fluid is separated, by heating, from said liquid solution so that there exit from the generator (10) a solution poor of said first operating fluid and of said first operating fluid in the vapour state and wherein said first operating fluid in the vapour state is delivered to said first condenser (11);
wherein said fist hydraulic circuit (1) comprises a recirculation line (15) to delivery said solution poor of first operating fluid up to said second treatment device (14) at which said first operating fluid in the vapour state is mixed with said solution poor of said first operating fluid so as to obtain a solution rich in operating fluid; and
wherein said first hydraulic circuit comprises a pump (16) to deliver said solution rich in operating fluid from said treatment device (14) to said first treatment device (10);
characterized in that
said first hydraulic circuit (1) comprises a regenerative heat exchanger (17) arranged between said recirculation line (15) and said pump (16) so as to pre-heat said solution rich in operating fluid as it enters the generator (10) by recovering heat from said solution poor in said first operating fluid discharged from said generator (10).

The heat pump system of the invention is, in all respects, a "hybrid" heat pump in which the heat released by the second operating fluid in the compression heat pump cycle may be used, wholly or in part, in the combined heat pump cycle to achieve the separation of the first operating fluid from the material system formed with the auxiliary substance.

With regard to the energy balance of the heat pump of the invention with respect to the external environment, it is noted that, in the face of an energy expenditure essentially for the compression of the second operating fluid, the principal useful effect achieved is the production of refrigerating power in correspondence of the evaporator and/or of thermal power in correspondence of the condenser of the first hydraulic circuit for carrying out the combined heat pump cycle. Furthermore, depending on the specific configurations and the operating modalities of the system, a further useful effect may be the production of refrigerating power in correspondence of the evaporator of the second hydraulic circuit for carrying out the compression heat pump cycle and/or the production of thermal power in correspondence of the second treatment device of the material system of the first hydraulic circuit for carrying out the combined heat pump cycle.

Advantageously, due to the multiplicity of above-mentioned useful effects, the heat pump system of the invention is capable of simultaneously handling a plurality of heat consumers with differing requirements in terms of demand for refrigerating/thermal power and/or of operating temperatures, such as for example installations for cooling/conditioning and/or heating environments, installations for the production of domestic hot water, or for heating of volumes of water for other uses, such as water for swimming pools, installations for the cooling/heating of process fluids, etc. This aspect is especially advantageous in the case of use in large buildings or building complexes, both for private habitation, for example large blocks of flats, skyscrapers, etc, and public buildings, for example hospitals, schools, business parks or sports centres, etc.

Moreover, the production of a combined heat pump cycle and a compression heat pump cycle thermally coupled together enables to obtain thermodynamic operating conditions for the single components of the installation that are in general more advantageous than those obtainable -external conditions being regarded as equal-for the same components operating in non-coupled heat pump cycles. This advantageously translates into the possibility of obtaining appreciably higher COPs than those typical of systems of the known art, comprising absorption and compression heat pumps as distinct and thermally uncoupled units.

In particular, numerical simulations conducted by the Applicant with reference to applications of practical interest have shown that the heat pump system of the invention is able to achieve COP values within the range of 3 to 15, depending on the operating conditions and refrigerating and/or thermal powers actually used as the useful effect.

Advantageously, moreover, the thermal coupling between the two heat pump cycles also permits operating conditions to be managed effectively at partial loads, without appreciable repercussions on the COP.

Finally, again due to the thermal coupling between the two heat pump cycles, it is possible to integrate the components at which heat exchanges take place between the two hydraulic circuits. The heat pump system of the invention can therefore be advantageously produced in more compact forms as compared with known systems comprising absorption and compression heat pumps as distinct units.

In a second aspect, the invention relates to a method of cooling and/or heating comprising the steps of:

a) carrying out a heat pump cycle with a first operating fluid which, during part of said cycle, is associated with an auxiliary substance so as to form a material system therewith, said cycle comprising the steps of:

a1) separating at least a fraction of said first operating fluid from said material system;

a2) at least partially condensing the first operating fluid which has been separated;

a3) at least partially evaporating the first operating fluid which has been condensed, and

a4) incorporating the first operating fluid which has been evaporated again in said material system;

b) carrying out, by means of a second operating fluid, a compression heat pump cycle comprising the steps of:

b1) at least partially condensing said second operating fluid, and

b2) at least partially evaporating said second operating fluid which has been condensed,

characterised by the step of

c) transferring heat released from said second operating fluid during said condensation step b1) to said material system for separating said at least one fraction of said first operating fluid therefrom during said separation step a1), further comprising the steps of:

selecting said material system as a liquid solution;

separating, by heating, at least a fraction of said first operating fluid from said liquid solution so that there exit a solution poor of said first operating fluid and of said first operating fluid in the vapour state, and deliver said first operating fluid in the vapour state to a first condenser (11);

providing a recirculation line (15) to delivery said solution poor of first operating fluid up to said second treatment device (14) at which said first operating fluid in the vapour state is mixed with said solution poor of said first operating fluid so as to obtain a solution rich in operating fluid; and

providing a pump (16) to deliver said solution rich in operating fluid from said treatment device (14) to said first treatment device (10);

characterized in that it comprises the steps of:

providing said first hydraulic circuit (1) with a regenerative heat exchanger (17) arranged between said recirculation line (15) and said pump (16) so as to pre-heat said solution rich in operating fluid as it enters the generator (10) by recovering heat from said solution poor in said first operating fluid discharged from said generator (10).

Due to the transfer of heat between the first and second operating fluid in step c), and therefore to the thermal coupling between the combined heat pump cycle and the compression heat pump cycle, which is carried out in this method, it is advantageously possible to handle a plurality of heat consumers having differing requirements in terms of the demand for refrigerating/thermal power and of operating temperatures, in all cases maintaining elevated values of COP, in a way analogous to that already described with reference to the heat pump system of the invention.

Preferred embodiments of the two aspects of the invention described above are the subject of the respective dependent claims, the content of which is included here in its entirety for reference.

Brief description of the drawings

Further features and advantages of the present invention will be clearer from the following description of some of its preferred embodiments, which is given here in what follows by way of non-limiting illustration with reference to the attached figures, wherein:

- Figs. 1a, 1b show schematic circuit diagrams of two variants of a first preferred embodiment of the heat pump system of the invention;
- Figs. 2a, 2b show schematic circuit diagrams of two variants of a second preferred embodiment of the heat pump system of the invention;
- Figs. 3a, 3b show schematic circuit diagrams of two variants of a third preferred embodiment of the heat pump system of the invention;
- Figs. 4a, 4b show schematic circuit diagrams of two variants of a fourth preferred embodiment of the heat pump system of the invention;
- Fig. 5 is a block diagram showing a first embodiment of the cooling and/or heating method of the invention, which may be carried out by means of the heat pump system of Figs. 1a, 1b or Figs. 4a, 4b;
- Fig. 6 is a block diagram showing a second embodiment of the cooling and/or heating method of the invention, which may be carried out by means of the heat pump system of Figs. 2a, 2b, and
- Fig. 7 is a block diagram showing a first embodiment of the cooling and/or heating method of the invention, which may be carried out by means of the heat pump system of Figs. 3a, 3b or Figs. 4a, 4b.

Detailed description of preferred embodiments of the invention

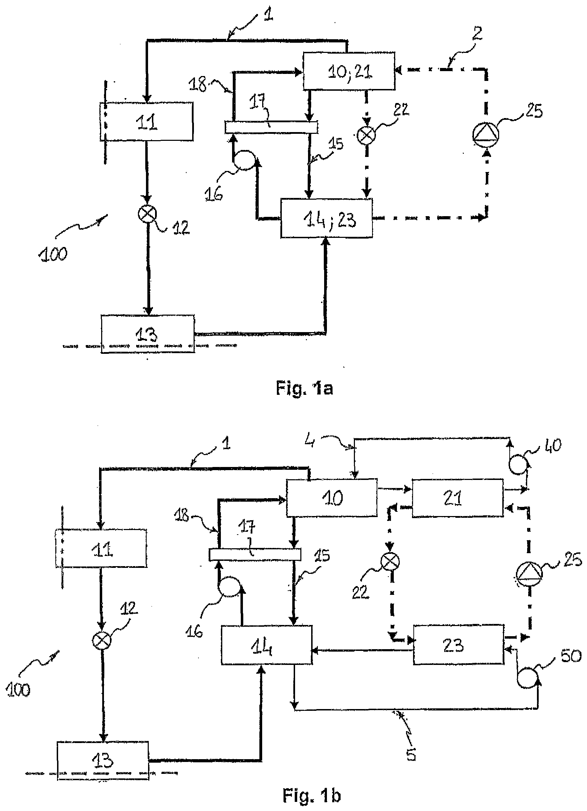

In Figs. 1-4, a heat pump system according to the present invention is indicated overall by the reference numeral 100.

The heat pump system 100 comprises a first hydraulic circuit 1, indicated by a thick solid line, suitable to carry out a combined heat pump cycle with a first operating fluid which, during part of the cycle, forms a material system with a suitable auxiliary substance, and a second hydraulic circuit 2, indicated with a thick dot-dashed line, suitable to carry out a compression heat pump cycle with a second operating fluid.

With regard to the first hydraulic circuit 1, for the sake of clarity, in the following description reference will be made to preferred embodiments of the invention, in which the combined heat pump cycle carried out in this hydraulic circuit is in particular an absorption heat pump cycle, in which the material system - that the first operating fluid forms with the auxiliary substance during part of the cycle- is a liquid solution.

In other preferred embodiments of the invention, not described in detail here, the combined heat pump cycle may be an absorption heat pump cycle, in which the material system - that the first operating fluid forms with the auxiliary substance during part of the cycle- is a solid mass, for example in the form of granules or panels, on to which the operating fluid is adsorbed.

In particular, therefore, the first hydraulic circuit 1 comprises a so-called "generator" 10 as the first device for treating the liquid solution (material system) formed with the auxiliary substance, a condenser 11, an expansion device 12 for expanding the operating fluid, e.g. a laminating valve, an evaporator 13 and a so-called "absorber" 14 as a second device for treating the liquid solution (material system) formed with the auxiliary substance.

In the generator 10, at least a fraction, and possibly the most part of the first operating fluid is separated, by means of heating, from the liquid solution formed with the auxiliary substance. Therefore there exit from the generator 10, the first operating fluid substantially pure, in the vapour state under higher temperature and pressure conditions of the cycle, and a solution poor in operating fluid ("poor solution"), in the liquid state, which solution contains substantially all the auxiliary solution. The separated first operating fluid then arrives at the condenser 11, where it releases heat by condensing at least in part by means of an heat exchange with an environment or a fluid at a higher cycle temperature. Following the expansion in the expansion device 12, the first operating fluid then arrives at the evaporator 13, where it absorbs heat by evaporating at least in part by means of an heat exchange with an environment or a fluid at a lower cycle temperature.

The evaporated first operating fluid is then sent to the absorber 14, in which said operating fluid again goes into solution with the poor solution, usually by an exothermic process. The poor solution discharged from the generator 10 is returned to the absorber 14 by means of a suitable recirculation line 15. The solution thus obtained, which is rich in operating fluid, is then again sent to the generator 10 by means of a pump 16.

A regenerative heat exchanger 17 is preferably arranged between the recirculation line 15 and a delivery branch 18 of the pump 16, so as to pre-heat the rich solution as it enters the generator 10 by recovering heat from the poor solution discharged from the generator 10 itself.

The second hydraulic circuit 2 for carrying out the compression heat pump cycle comprises a condenser 21, in correspondence of which the second operating fluid releases heat by condensing at least partially by means of an heat exchange with an environment or a fluid at a higher cycle temperature, an expansion device 22, for example a laminating valve, for expanding the second condensed operating fluid, an evaporator 23 in correspondence of which the second fluid absorbs heat and evaporates by means of heat exchange with an environment or a fluid at a lower cycle temperature, and a compressor 25 for compressing the evaporated second operating fluid and returning it to the condenser 21 under entry conditions of pressure and temperature.

According to the invention, the condenser 21 of the second hydraulic circuit 2 is thermally coupled with the generator 10 of the first hydraulic circuit 1, so that the heat released by the second operating fluid in correspondence of the condenser 21 can be transferred to the generator 10, where it is used for the process of separating the first operating fluid from the solution in the absorption heat pump cycle. In other words, the condenser 21 of the second fluid is advantageously utilised as a source of heat for the generator 10 of the material circuit. As regards the energy balance, the sole energy expenditure is represented by the electrical energy necessary for functioning of the compressor 25 of the second hydraulic circuit 2. Differently from the known solutions, in the heat pump system according to the invention no "external source" is required to supply thermal energy to the generator 10 of the first hydraulic circuit. On the contrary, according to the invention, the condenser 21 of the second circuit 2 represents, for the generator 10 of the first hydraulic circuit 1, a source of thermal power "internal" to the system with great advantages, from an energetic point of view, as will become apparent from the following description.

The thermal coupling between the generator 10 and the condenser 21 can be achieved in practice by producing these components according to an integrated design, as shown schematically in Figs. 1a, 2a, 3a, and 4a, with full advantages in reduction of bulkiness. Alternatively, the generator 10 and the condenser 21 may be kept separate and be positioned in an heat exchange relationship by means of an intermediate hydraulic circuit 4 fitted with a circulating pump 40 for circulating a suitable heat-conductive fluid, as shown schematically in Figs. 1b, 2b, 3b, and 4b, in which the intermediate hydraulic circuit 4 is indicated with a thin continuous line. In a first preferred embodiment of the heat pump system 100, shown in Figs. 1a and 1b, there is a further thermal coupling between the absorption heat pump cycle and the compression heat pump cycle, created between the absorber 14 of the first hydraulic circuit 1 on and the evaporator 23 of the second hydraulic circuit 2 in such a way that the heat released in correspondence of the absorber 14 can be transferred to the second operating fluid in correspondence of the evaporator 23, to carry out at least partially the evaporation of said second operating fluid within the compression heat pump cycle.

Since the passing into solution of the first operating fluid with the auxiliary substance in an absorption heat pump cycle or, more generally, the incorporation of said fluid in the material system formed with the auxiliary substance in a combined heat pump cycle, is normally an exothermic process, with this embodiment it is advantageously possible to use the heat released from the absorber 14 to enable the evaporator 23 to operate at temperatures higher than those typical in compression heat pump cycles, in which pump the evaporator is in an heat exchange relationship with the external environment. This enables the energy required for compression of the second operating fluid to be appreciably reduced - for equal amounts of heat released in correspondence of the condenser 21 - and therefore advantageously to achieve a further increase in the COP of the heat pump system 100.

Moreover, due to the high temperature (typically around 70°C) which in this embodiment the first operating fluid can reach at the condenser 11 of the first hydraulic circuit 1, in the case of cooling operation it is advantageously possible to consume the heat released by the first operating fluid at such a component by using only air heat exchangers, even in the presence of very high temperatures (even higher than 60 °C) of the external environment. It is therefore possible to avoid the use of cooling towers and the related disadvantages of bulkiness, the consumption of water and electrical energy, and the undesirable presence of large volumes of water at a temperature capable of developing bacteria or other harmful microorganisms. This last aspect represents a problem in particular in the case of use in hospitals or other medical installations.

This embodiment of the heat pump system 100 may therefore have an advantageous application in particular for the generation of cold at high efficiency in regions with a generally very hot and/or dry climate, in particular in applications in which the use of cooling towers is not possible (for example, in skyscrapers), or is not recommended (for example in medical installations or hospitals).

The refrigerating power obtained with the aid of the evaporator 13 may be used in general to cool a service fluid circulating within a cooling circuit indicated schematically in Figs. 1a and 1b by the fine dashed line. However, analogously thereto, the thermal power obtained with the aid of the condenser 11 may be used in general to heat a service fluid circulating within a heating circuit also indicated schematically in Figs. 1a and 1b by the dash-dot-dotted line. The expression heating/cooling circuit is intended to indicate generically any "users" adapted to utilise the refrigerating/thermal power generated by means of the system according to the invention.

Thermal coupling between the absorber 14 and the evaporator 23 can be achieved in practice by producing these components with an integrated design, as shown schematically in Fig 1a. Alternatively, these components may be kept separate and arranged in an heat exchange relationship by means of an intermediate hydraulic circuit 5 fitted with a circulating pump 50 for circulating a suitable heat-conductive fluid, as shown schematically in Fig. 1b, where the intermediate hydraulic circuit 5 is indicated with a thin continuous line.

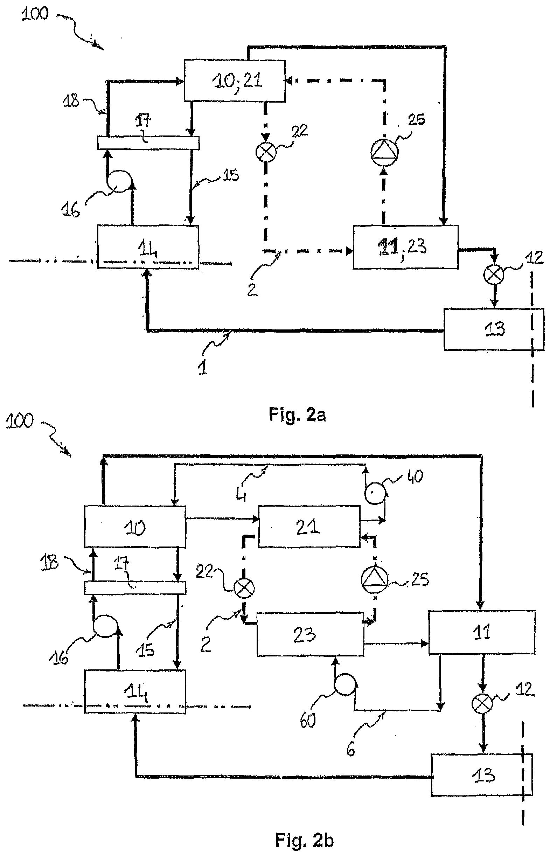

In a second preferred embodiment of the heat pump system 100, shown in Figs. 2a and 2b, the condenser 11 of the first hydraulic circuit 1 is thermally coupled with the evaporator 23 of the second hydraulic circuit in such a way that the heat released by the first operating fluid in correspondence of the condenser 11 can be transferred to the second operating fluid in correspondence of the evaporator 23 to achieve at least partially the evaporation of the second operating fluid in the compression heat pump cycle.

This embodiment further increases the advantages obtained with the embodiment previously described in respect of the increase in COP deriving from a reduction in the energy required for compression of the second operating fluid. In other words, the thermal energy deriving from condensation of the first fluid of the first hydraulic circuit 1 is advantageously used to raise the thermal level of the second fluid of the second circuit 2 at the outlet of the evaporator 23 so as to greatly limit the work required for the compressor. This obviously translates into a reduction in the electrical energy used, i.e. an increase in the COP.

In summary, the further advantageous aspect of this embodiment therefore relates to the possibility of producing both refrigerating power (at the evaporator 13) and thermal power at an intermediate temperature (at the absorber 14) while maintaining elevated COPs. The thermal power at intermediate temperature can for example be used to produce domestic hot water, for dehumidification, etc.

In Figs. 2a and 2b, the dashed line indicates schematically a cooling circuit wherein there circulates an operating fluid adapted to be cooled by the refrigerating power generated by the evaporator 13 of the first hydraulic circuit 1.

In the same figures, the dash-dot-dot line indicates schematically a heating circuit in which an service fluid, suitable to be heated by the thermal power generated by the absorber 14 of the first hydraulic circuit 1, circulates.

The thermal coupling between the condenser 11 and the evaporator 23 can be achieved in practice by producing these components with an integrated design, as shown schematically in Fig. 2a. Alternatively, these components may be kept separate and be arranged in a heat exchange relationship by means of an intermediate hydraulic circuit 6 fitted with a circulating pump 60 for circulating a suitable heat-conductive fluid, as shown schematically in Fig. 2b, in which the intermediate hydraulic circuit 6 is indicated with a thin continuous line.

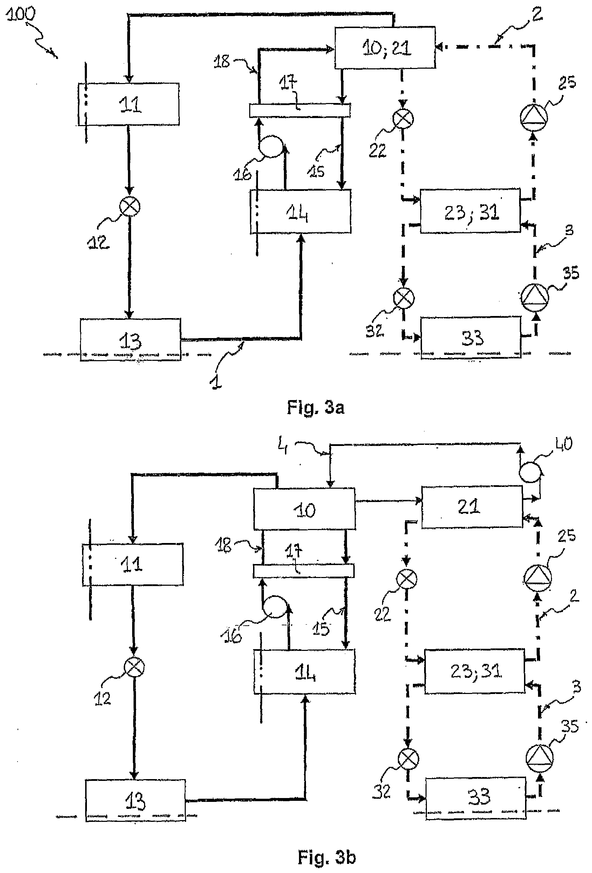

In a third preferred embodiment of the heat pump system 100, shown in Figs. 3a and 3b, the latter hydraulic circuit comprises a third hydraulic circuit 3 suitable to carry out a compression heat pump cycle with a third operating fluid, indicated in the drawings with a thick broken line.

The third hydraulic circuit 3, analogously to the second hydraulic circuit 2, comprises the condenser 31, in correspondence of which the third operating fluid releases heat, by condensing at least partially, an expansion device 32, for example a laminating valve, for expanding the condensed second operating fluid, an evaporator 33 n correspondence of which the second fluid absorbs heat and evaporates, and a compressor 35 for compressing the evaporated second operating fluid and returning it to the condenser 31 under entry conditions of pressure and temperature.

The condenser 31 is thermally coupled with the evaporator 23 of the second hydraulic circuit 2 in such a way that heat released by the third operating fluid at the condenser 31 may be transferred to the second operating fluid at the evaporator 23.

Advantageously, in this embodiment the second and the third hydraulic circuit 2, 3 in a heat exchange relationship with one another as described, overall define a dual-stage compression heat pump unit, capable of producing heat at high temperature (in correspondence of the condenser 21) as well as with very low evaporation temperatures of the (third) operating fluid (in correspondence of the evaporator 33). This unit is therefore particularly suitable to a thermal coupling with an absorption heat pump cycle or, in general, with a combined heat pump cycle, for supplying the heat necessary for the process of separating the operating fluid from the solution, which, in the embodiment of the invention here described, takes place in the generator 10.

Furthermore, this embodiment enables the production of refrigerating power at both the evaporator 13 of the first hydraulic circuit 1 and at the evaporator 33 of the third hydraulic circuit 3. In other words, the evaporator 13 and the evaporator 33 may be thermally coupled to a cooling circuit wherein a cooling fluid circulates by means of the refrigerating power generated by the two evaporators. This circuit has been indicated schematically by a dashed line in Figs. 3a and 3b. As illustrated, the evaporator 13 of the first hydraulic circuit 1 and the evaporator 33 of the second hydraulic circuit 2 may separately cool the operating fluid in accordance with substantially in-parallel operation. In summary, each of the two evaporators (33 and 13) cool a corresponding load of the operating fluid. The loads may be collected in a collector, the outlet of which is assigned for consumption. Alternatively, the two evaporators 33, 13 might cool the operating fluid in series or it could be cooled first by one exchanger and then by the other.

Furthermore, this third embodiment of the systems (Figs. 3a and 3b) advantageously allows thermal power to be produced at two different temperatures respectively in correspondence of the absorber 14 and in correspondence of the condenser 11 while maintaining elevated COPs. The thermal power at relatively low temperature recovered from the absorber 14 may be used, for example, for heating of a service fluid (for example domestic hot water), for dehumidification, etc. The thermal power at relatively high temperature recovered from the condenser 11 may furthermore be used for heating of a service fluid. In this regard, in Fig 3 the dash-dot-dot lines drawn through the absorber 14 and through the condenser 11 are intended to indicate the exchange of heat with an operating circuit in which there circulates a service fluid.

Moreover, the thermal coupling between the condenser 31 of the third hydraulic circuit 3 with the evaporator 23 of the second hydraulic circuit 2 can be achieved in practice by producing these components with an integrated design, as shown schematically in Figs. 3a and 3b, or with components that are separate and positioned in a heat exchange relationship by means of an intermediate hydraulic circuit (not shown in the drawings).

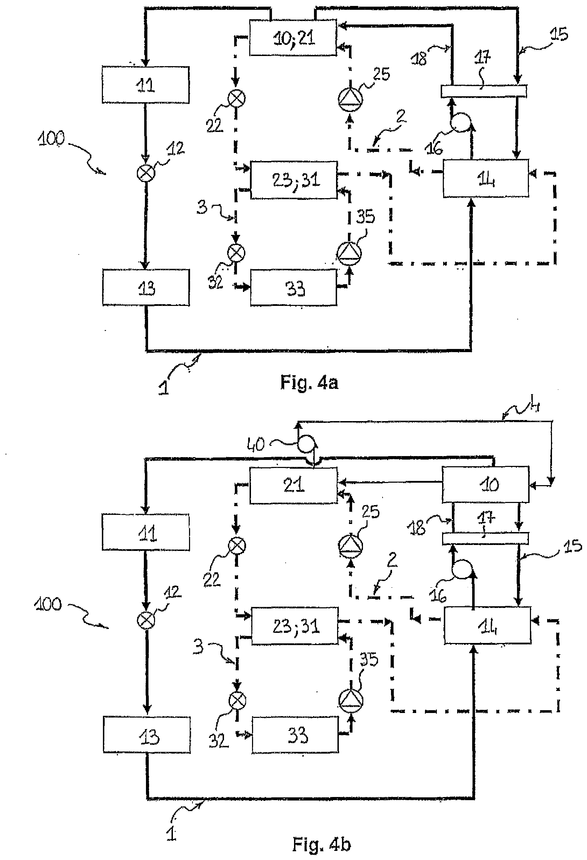

Figs. 4a and 4b show a fourth preferred embodiment of the heat pump system 100. This embodiment differs from the third embodiment illustrated in Figs. 3a and 3b described above in the configuration of the second hydraulic circuit 2, to which the absorber 14 of the first hydraulic circuit 1 is also hydraulically connected in this case. In particular, the absorber 14 is connected in the second hydraulic circuit 2 between the evaporator 23 and the compressor 25.

In this way it is advantageously possible to achieve two different modes of operation with the same equipment, according to whether the compressor 35 in the third hydraulic circuit 3 is switched on or off. In particular, if the compressor 35 is on, and therefore the compression heat pump cycle in the third hydraulic circuit 3 is switched on, the mode of operation of this embodiment coincides substantially with that achievable with the third embodiment described above (Figs. 3a and 3b) of the heat pump system 100. Furthermore, in this case the second operating fluid may undergo further heating prior to compression due to passage into the absorber 14. If, however, the compressor 35 is switched off, and the compression heat pump cycle in the third hydraulic circuit 3 is therefore not active, the operating mode of this embodiment coincides with that possible with the first embodiment (Figs. 1a and 1b) described above of the heat pump system 100.

In all the embodiments described above, depending on the fluid type selected as the first operating fluid, to produce the absorption heat pump cycle within the desired temperature interval it may be necessary to use pressures lower than atmospheric pressure. In this case, the first hydraulic circuit 1 must be produced with a watertight seal. The desired degree of vacuum can be created by means of an external vacuum pump, temporarily connected to the first hydraulic circuit 1, or also by means of a dedicated vacuum pump integrated into the heat pump system 100 of the invention. This second solution may be advantageous in the case of large-scale installations and/or in case of a foreseeable need for periodic changes in the operating conditions of the absorption heat pump cycle.

It is also observed that in all the embodiments described above of the heat pump system according to the invention, the compression is provided only for the second circulating fluid of the second circuit 2. In other words, the integration of the first hydraulic circuit 1 with the second hydraulic circuit 2 according to the invention advantageously does not require the compression of the vapours circulating in the first hydraulic circuit 1. This translates into a notable simplification of the heat pump system under the technological profile. Moreover, by comparison with the known solutions which provide for compression of the vapours in the material system, the solution according to the invention is both more reliable and simplifies the maintenance and control operations.

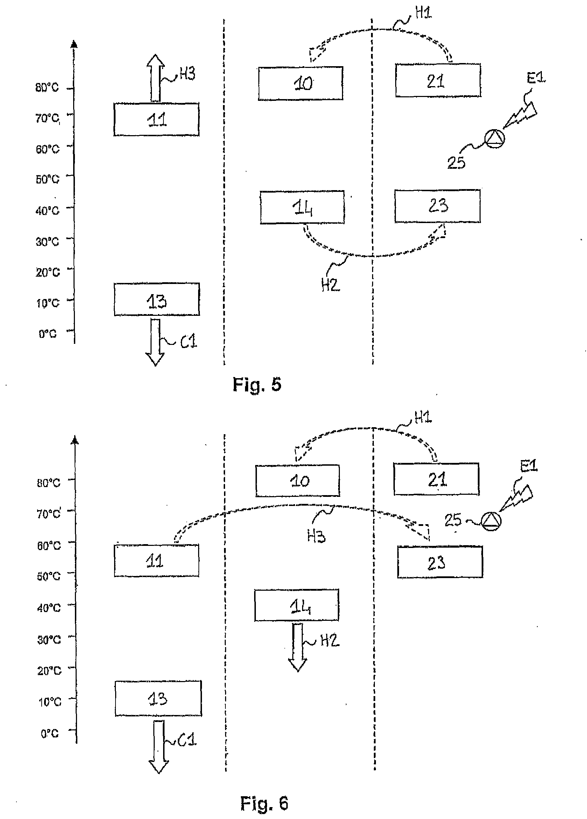

With reference to Figs. 5-7, preferred embodiments of the method for cooling and/or heating in accordance with the present invention will now be described, which embodiments are implementable by means of the heat pump system 100 described above.

In this case also, for the sake of clarity reference will be made to embodiments of the method the invention wherein the combined heat pump cycle is in particular an absorption heat pump cycle wherein the material system which the first operating fluid forms with the auxiliary substance during part of the said cycle is a liquid solution.

Figs. 5-7 show schematically in the form of block diagrams those components of the heat pump system 100 described above that are involved in the exchanges of energy both internal to the system (dashed arrows) and with the external environment (solid arrows) and which are important for the description of the methods of the invention and for the advantages thereof. Substantially passive components have therefore been omitted, for example the expansion device, the components having a relatively negligible influence within the complex energy balance of the heat pump system 100, such as for example the circulating pumps, the electrical energy consumption of which is negligible by comparison with that of the compressors.

In such figures, the components shown of the heat pump system 100 are arranged at different levels with respect to a temperature scale, to visually indicate the different temperatures within the ambit of which the respective heat exchangers are possible.

Furthermore, the components are grouped into columns according to the cycle in which they operate. In particular, in the right-hand column shows the components which operate within the absorption heat pump cycle and in which the first operating fluid circulates alone, that is the condenser 11 and the evaporator 13.

The middle column shows the components which operate within the absorption heat pump cycle and in which the first operating fluid circulates in solution with the auxiliary substance, that is the generator 10 and the absorber 14. Finally, in the left-hand column the components which operate within the compression heat pump cycles are represented, that is the condenser 21, the evaporator 23 and the compressor 25 and, where applicable, the condenser 31, the evaporator 33 and the compressor 35.

In a first step of the cooling and/or heating method of the invention, an absorption heat pump cycle is performed by means of a first operating fluid capable of forming a solution with a predetermined auxiliary substance. This step may be activated by means of the first hydraulic circuit 1 of the heat pump system 100 described above.

In greater detail, this step comprises: separating at least a fraction of the first operating fluid from the solution formed with the auxiliary substance in correspondence of the generator 10; at least partially condensing the first operating fluid which has been separated in correspondence of the condenser 11; at least partially evaporating, in correspondence of the evaporator 13, the first operating fluid which has been condensed and then subjected to expansion in the expansion device 12; passing the first operating fluid which has been evaporated again into solution with the auxiliary substance at the absorber 14.

In a second step of the method, at least in part simultaneous with the first step, a compression heat pump cycle, a compression heat pump cycle is carried out by means of a second operating fluid. This step may be implemented by means of the second hydraulic circuit 2 of the heat pump system 100 described above.

In greater detail, this step comprises: at least partially condensing, in correspondence of the condenser 21, the second operating fluid previously compressed by means of the compressor 25; evaporating, in correspondence of the evaporator 23, the second operating fluid which has been condensed and then subjected to expansion in the expansion device 22.

In a third step of the method, at least in part simultaneous with the first and the second steps described above, the heat released by the second operating fluid during condensation in the compression heat pump cycle is transferred to the solution within the absorption heat pump cycle to perform the separation of at least a fraction of the first operating fluid from the solution (see arrow H1 in Figs. 5-7).

This step may be performed within the heat pump system 100 of the invention due to the thermal coupling already described between the condenser 21 of the second hydraulic circuit 2 and the generator 10 of the first hydraulic circuit 1.

The temperature of condensation TC2 of the second operating fluid within the compression heat pump cycle is preferably within the range from approximately 70°C and approximately 95°C, more preferably between approximately 75°C and approximately 85 °C.

Because the passage of the first operating fluid into solution with the auxiliary substance in the absorption heat pump cycle - or, more generally, incorporation thereof into the material system in a combined heat pump cycle - is typically an exothermic process, in a first preferred embodiment thereof shown in Fig. 5, the method of the invention may furthermore comprise the fourth step, at least in part simultaneous with the preceding steps described, of transferring heat released in the absorption heat pump cycle -following the passage of the first operating fluid into solution- to the second operating fluid during the evaporation of the latter in the compression heat pump cycle (see arrow H2 in Fig. 5).

This step may in particular be implemented by means of the embodiments of the heat pump system 100 of the invention that have been previously described with reference to Fig. 1a, 1b, as well as Figs. 4a, 4b in the case in which the compressor 35 is switched off, thanks to the thermal coupling between the absorber 14 of the first hydraulic circuit 1 and the evaporator 23 of the second hydraulic circuit 2.

The heat released following the passage into solution of the first operating fluid in solution is typically available at temperatures within the range of approximately 35°C to approximately 55°C.

In this preferred embodiment of the method of the invention, in the face of the expense of electrical power (arrow E1) for the operation of the compressor 25 of the second hydraulic circuit 2, the following may be achieved as a useful effect, together or alternatively: the production of refrigerating power (arrow C1) in correspondence of the evaporator 13 and of thermal power (arrow H3) in correspondence of the condenser 11 of the first hydraulic circuit 1. Therefore, the following COP values may alternatively be obtained, in this case with the heat pump system 100:

- $$COP_1 = (H3 + C1)/E1;$$

- $$COP_2 = H3/E1;$$

- $$COP_3 = C1/E1.$$

According to a second preferred embodiment of the method of the invention, shown in Fig. 6, in place of the fourth step described above, it is provided a step of transferring heat released from the first operating fluid during condensation in the absorption heat pump cycle to the second operating fluid during evaporation of the latter in the compression heat pump cycle (see arrow H3 in Fig. 6).

This step may in particular implemented by means of the embodiments of the heat pump system 100 of the invention previously described with reference to Figs. 2a, 2b, thanks to the thermal coupling between the condenser 11 of the first hydraulic circuit 1 and the evaporator 23 of the second hydraulic circuit 2. In this embodiment, the temperature of condensation TC1 of the first operating fluid of the absorption heat pump cycle is preferably within the range from approximately 40°C to approximately 70°C, more preferably between approximately 50°C and approximately 60 °C.

Advantageously, the evaporation of the second operating fluid in correspondence of the evaporator 23 may thus take place at temperatures correspondingly higher as compared with those reached in other embodiments of the methods of the invention, by which, the other conditions being equal, the jump in temperature in the compression heat pump cycle is reduced with a consequent increase in COP.

In this preferred embodiment of the method of the invention, in the face of the expense of electrical power (arrow E1) for operation of the compressor 25 of the second hydraulic circuit 2, the following may be achieved as a useful effect, together or alternatively: the production of refrigerating power (arrow C1) at the evaporator 13 and the production of thermal power at intermediate temperature (arrow H2) at the absorber 14 of the first hydraulic circuit 1.

Therefore, the following COP values may alternatively be obtained, in this case with the heat pump system 100:

- $$COP_4 = (H2 + C1)/E1;$$

- $$COP_5 = H2/E1,$$

as well as still

$$COP_3 = C1/E1.$$

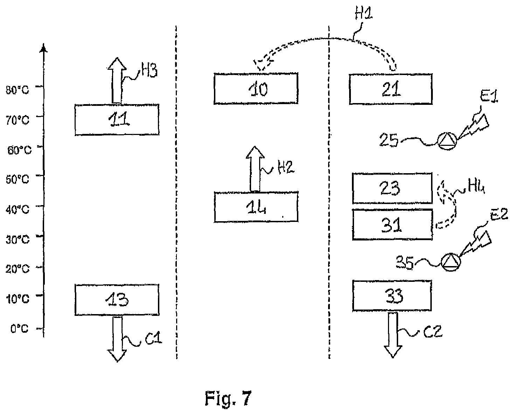

In a third preferred embodiment, shown in Fig. 7, the method of the invention further comprises a fifth and a sixth step, at least in part simultaneous with the steps described above.

In particular, in the fifth step of the methods are further compression heat pump cycle is carried out by means of a third operating fluid. This cycle is analogous to the compression heat pump cycle described above with reference to the second step of the method, but is carried out within a reduced temperature interval.

In the sixth phase of the method, the heat released by the third operating fluid, during the condensation in the said further compression heat pump cycle, is transferred to the second operating fluid during the evaporation of this latter in the compression heat pump cycle (see arrow H4 in Fig. 7).

Advantageously in this way, the two compression heat pump cycles are thermally coupled so as to produce a dual-stage compression heat pump cycle.

These further steps may in particular be performed by means of the embodiments of the heat pump system 100 of the invention previously described with reference to Figs. 3, 3b, as well as Figs 4, 4b when the compressor 35 is active, thanks to thermal coupling between the condenser 31 of the third hydraulic circuit 3 and the evaporator 23 of the second hydraulic circuit 2.

The temperature of condensation TC3 of the third operating fluid in said further compression heat pump cycle is preferably within the range from approximately 30°C and approximately 60°C, more preferably between approximately 35°C and approximately 50 °C.

In this preferred embodiment of the method of the invention, in the face of the expense of electrical power for the operation of the compressor is 25 and 35 (arrows E1, E2) respectively in the second 2 2/3 3 hydraulic circuit, the following useful effects may be achieved, together or alternatively: the production of refrigerating power both in correspondence of evaporator 13 (arrow C1) of the first hydraulic circuit 1 and of the evaporator 33 (arrow C2) of the third hydraulic circuit 3, the production of thermal power at an intermediate temperature in correspondence of the absorber 14 (arrow H2) of the first hydraulic circuit 1 and the production of thermal power at a higher temperature at the condenser 11 (arrow H3) of the first hydraulic circuit 1. Therefore, in this case with the heat pump system 100, the following COP values may alternative it be obtained:

$$COP_6 = (C1 + C2 + H2 + H3)/(E1 + E2);$$

$$COP_7 = (H2 + C1 + C2)/(E1 + E2);$$

$$COP_8 = (H3 + C1 + C2)/(E1 + E2);$$

$$COP_9 = (C1 + C2)/(E1 + E2);$$

$$COP_{10} = (H2 + H3)/(E1 + E2);$$

$$COP_{11} = H2/(E1 + E2);$$

$$COP_{12} = H3/(E1 + E2);$$

$$COP_{13} = C1/(E1 + E2);$$

$$COP_{14} = C2/(E1 + E2).$$

The first operating fluid and the respective auxiliary substance for the combined heat pump cycle, the second and the third operating fluid in the two compression heat pump cycles and the heat-conductive fluids for intermediate hydraulic circuits as necessary interposed between the thermally coupled units as described above may be selected by the person skilled in the field from among those known on the basis of specific application requirements.

Still on the basis of specific application requirements, the person skilled in the field will be able to select the second and the third operating fluid identical or different from one another.

In the case wherein the combined heat pump cycle is in particular and absorption heat pump cycle, water and lithium bromide respectively are preferably selected as the first operating fluid and auxiliary substance.

For the compression heat pump cycle(s), R600 (n-butane) is preferably selected.

For the intermediate hydraulic circuits which may be present, diathermic fluids or water are preferably selected.

**Claims**

1. Heat pump system (100) comprising:

   - a first hydraulic circuit (1) adapted to carry out a heat pump cycle with a first operating fluid which, during part of said cycle, is associated with at least one auxiliary substance so as to form a material system therewith, said first hydraulic circuit (1) comprising:
   - a first treatment device (10) for said material system, at which at least a fraction of the first operating fluid is separated from said material system;
   - a first condenser (11), at which the first operating fluid which has been separated at least partially condenses, thus releasing heat;
   - a first evaporator (13), at which the first operating fluid which has been condensed at least partially evaporates, thus absorbing heat, and
   - a second treatment device (14) for said material system, at which the first operating fluid which has been evaporated is again incorporated in said material system;
   - a second hydraulic circuit (2) suitable to carry out a compression heat pump cycle with a second operating fluid, said second circuit (2) comprising:

      - a second condenser (21), at which said second operating fluid at least partially condenses, thus releasing heat,
      - a second evaporator (23), at which said second operating fluid evaporates, thus absorbing heat, and
      - a compressor (25) for compressing the evaporated second operating fluid and returning it to entry conditions of pressure and temperature of said condenser (21),

   wherein said second condenser (21) is thermally coupled with said first treatment device (10) to transfer heat released from said second operating fluid at said second condenser (21) to said first treatment device (10) for separating said at least one fraction of the first operating fluid from said material system;

   wherein said material system is a liquid solution;

   wherein at said first treatment device (10) at least a fraction of said first operating fluid is separated, by heating, from said liquid solution so that there exit from the generator (10) a solution poor of said first operating fluid and of said first operating fluid in the vapour state and wherein said first operating fluid in the vapour state is delivered to said first condenser (11);

   wherein said fist hydraulic circuit (1) comprises a recirculation line (15) to delivery said solution poor of first operating fluid up to said second treatment device (14) at which said first operating fluid in the vapour state is mixed with said solution poor of said first operating fluid so as to obtain a solution rich in operating fluid; and

   wherein said first hydraulic circuit comprises a pump (16) to deliver said solution rich in operating fluid from said treatment device (14) to said first treatment device (10);

   **characterized in that**

   said first hydraulic circuit (1) comprises a regenerative heat exchanger (17) arranged between said recirculation line (15) and said pump (16) so as to pre-heat said solution rich in operating fluid as it enters the generator (10) by recovering heat from said solution poor in said first operating fluid discharged from said generator (10).

2. Heat pump system (100) according to claim 1, wherein said second treatment device (14) is thermally coupled with said second evaporator (23) to transfer heat released at said second treatment device (14) to said second operating fluid at said second evaporator.

3.  Heat pump system (100) according to claim 1, wherein said first condenser (11) is thermally coupled with said second evaporator (23) to transfer heat released from said first operating fluid at said first condenser (11) to said second operating fluid at said second evaporator (23).

4.  Heat pump system (100) according to any one of the previous claims, comprising a third hydraulic circuit (3) suitable to carry out a compression heat pump cycle with a third operating fluid, wherein said third hydraulic circuit (3) comprises a third condenser (31), at which said third operating fluid releases heat while at least partially condensing, and wherein said third condenser (31) is thermally coupled with said second evaporator (23) to transfer heat released from said third operating fluid at said third condenser (31) to said second operating fluid at said second evaporator (23).

5.  Method of cooling and/or heating by means of a heat pump system (100) according to claim 1, comprising the steps of:

    a) carrying out a heat pump cycle with a first operating fluid which, during part of said cycle, is associated with at least one auxiliary substance so as to form a material system therewith, said cycle comprising the steps of:

    a1) separating at least a fraction of said first operating fluid from said material system;
    a2) at least partially condensing the first operating fluid which has been separated;
    a3) at least partially evaporating the first operating fluid which has been condensed, and
    a4) incorporating the first operating fluid which has been evaporated again in said material system;

    b) carrying out a compression heat pump cycle by means of a second operating fluid, said cycle comprising the steps of:

    b1) at least partially condensing said second operating fluid, and
    b2) at least partially evaporating said second operating fluid which has been condensed,
    b3) compressing said second operating fluid up to the condensation conditions,

    comprising the step of
    c) transferring heat released from said second operating fluid during said condensation step b1) to said material system for separating said at least a fraction of said first operating fluid therefrom during said separation step a1); further comprising the steps of:

    selecting said material system as a liquid solution;
    separating, by heating, at least a fraction of said first operating fluid from said liquid solution so that there exit a solution poor of said first operating fluid and of said first operating fluid in the vapour state, and deliver said first operating fluid in the vapour state to a first condenser (11);
    providing a recirculation line (15) to delivery said solution poor of first operating fluid up to said second treatment device (14) at which said first operating fluid in the vapour state is mixed with said solution poor of said first operating fluid so as to obtain a solution rich in operating fluid; and
    providing a pump (16) to deliver said solution rich in operating fluid from said treatment device (14) to said first treatment device (10);

    **characterized in that** it comprises the steps of:
    providing said first hydraulic circuit (1) with a regenerative heat exchanger (17) arranged between said recirculation line (15) and said pump (16) so as to pre-heat said solution rich in operating fluid as it enters the generator (10) by recovering heat from said solution poor in said first operating fluid discharged from said generator (10).

6.  Method according to claim 5, wherein in said step b1) said second operating fluid has a temperature between about 70°C and about 95°C.

7.  Method according to claim 5 or 6, comprising the step of:
    d) transferring heat released upon the incorporation of said first operating fluid in said material system during said incorporation step a4) to said second operating fluid in said evaporation step b2).

8.  Method according to claim 5 or 6, comprising the step of:
    e) transferring heat released from said first operating fluid during said condensation step a2) to said second operating fluid in said evaporation step b2).

9. Method according to claim 8, wherein in said step a2), said first operating fluid has an average temperature between about 40°C and about 70°C.

10. Method according to any one of claims 5 to 9, comprising the steps of:

f) carrying out a further compression heat pump cycle by means of a third operating fluid, said cycle comprising the step of:
f1) at least partially condensing said third operating fluid;
g) transferring heat released from said third operating fluid during said condensation step f1) to said second operating fluid in said evaporation step b2).

11. Method according to claim 10, wherein in said step g) said third operating fluid has an average temperature between about 30°C and about 60°C.

12. Method according to any one of claims 5 to 11, wherein said heat pump cycle carried out with said first operating fluid is an absorption heat pump cycle.

13. Method according to any one of claims 5 to 11, wherein said heat pump cycle carried out with said first operating fluid is an adsorption heat pump cycle.


**Patentansprüche**

1. Wärmepumpsystem (100) umfassend:

- einen ersten hydraulischen Kreislauf (1), der zur Durchführung eines Wärmepumpenzyklus mit einem ersten Arbeitsfluid ausgebildet ist, dem mindestens eine Hilfssubstanz während eines Teils des Zyklus zugeordnet ist, um damit ein Materialsystem zu bilden, wobei dieser erste hydraulische Kreislauf (1) Folgendes umfasst:

- eine erste Behandlungsvorrichtung (10) für dieses Materialsystem, in der zumindest ein Teil des ersten Arbeitsfluids von diesem Materialsystem getrennt wird;
- einen ersten Kondensator (11), in dem das erste getrennte Arbeitsfluid mindestens teilweise kondensiert, also Wärme abgibt;
- einen ersten Verdampfer (13), in dem das erste kondensierte Arbeitsfluid mindestens teilweise verdampft, also Wärme aufnimmt, und
- eine zweite Behandlungsvorrichtung (14) für dieses Materialsystem, in der das erste verdampfte Arbeitsfluid wieder in diesem Materialsystem aufgenommen wird;

- einen zweiten hydraulischen Kreislauf (2), der zur Durchführung eines Kompressionswärmepumpenzyklus mit einem zweiten Arbeitsfluid geeignet ist, wobei dieser zweite hydraulische Kreislauf (2) Folgendes umfasst:
- einen zweiten Kondensator (21), in dem das zweite Arbeitsfluid mindestens teilweise kondensiert, also Wärme abgibt;
- einen zweiten Verdampfer (23), in dem das zweite Arbeitsfluid verdampft, also Wärme aufnimmt, und
- einen Verdichter (25) zum Verdichten des zweiten verdampften Arbeitsfluids und Wiederherstellen seiner anfänglichen Druck- und Temperaturbedingungen des Kondensators (21),

wobei dieser zweite Kondensator (21) mit dieser ersten Behandlungsvorrichtung (10) thermisch gekoppelt ist, um die von diesem zweiten Arbeitsfluid in diesem zweiten Kondensator (21) abgegebene Wärme in diese erste Behandlungsvorrichtung (10) zu übertragen, um zumindest ein Teil des ersten Arbeitsfluids von diesem Materialsystem zu trennen;
wobei dieses Materialsystem eine flüssige Lösung ist;
wobei in dieser ersten Behandlungsvorrichtung (10) zumindest ein Teil des ersten Arbeitsfluids von dieser flüssigen Lösung durch Erhitzen getrennt wird, so dass aus dem Generator (10) eine erstarbeitsfluidarme Lösung bzw. erstarbeitsfluidarme dampfförmige Lösung herausfließt und wobei dieses erste dampfförmige Arbeitsfluid diesem ersten Kondensator (11) zugeführt wird;
wobei dieser erste hydraulische Kreislauf (1) eine Rückführleitung (15) umfasst, um diese erstarbeitsfluidarme Lösung in diese zweite Behandlungsvorrichtung (14) zuzuführen, in der dieses erste dampfförmige Arbeitsfluid mit dieser erstarbeitsfluidarmen Lösung gemischt wird, um eine arbeitsfluidreiche Lösung zu erhalten; und

wobei dieser erste hydraulische Kreislauf eine Pumpe (16) umfasst, um diese arbeitsfluidreiche Lösung von dieser Behandlungsvorrichtung (14) in diese erste Behandlungsvorrichtung (10) zuzuführen;

**dadurch gekennzeichnet, dass**

dieser erste hydraulische Kreislauf (1) einen zwischen dieser Rückführleitung (15) und dieser Pumpe (16) angeordneten regenerativen Wärmetauscher (17) umfasst, um diese arbeitsfluidreiche Lösung beim Eintritt in den Generator (10) vorzuwärmen, indem Wärme aus dieser, von diesem Generator (10) abgegebenen erstarbeitsfluidarmen Lösung zurückgewonnen wird.

2. Wärmepumpsystem (100) nach Anspruch 1, wobei diese zweite Behandlungsvorrichtung (14) mit diesem zweiten Verdampfer (23) thermisch gekoppelt ist, um die von dieser zweiten Behandlungsvorrichtung (14) abgegebene Wärme in diesen zweiten Arbeitsfluid in diesem zweiten Verdampfer zu übertragen.

3. Wärmepumpsystem (100) nach Anspruch 1, wobei dieser erste Kondensator (11) mit diesem zweiten Verdampfer (23) thermisch gekoppelt ist, um die von diesem ersten Arbeitsfluid in diesem ersten Kondensator (11) abgegebene Wärme in diesen zweiten Arbeitsfluid in diesem zweiten Verdampfer (23) zu übertragen.

4. Wärmepumpsystem (100) nach irgendeinem der vorhergehenden Ansprüche, umfassend einen dritten hydraulischen Kreislauf (3), der zur Durchführung eines Kompressionswärmepumpenzyklus mit einem dritten Arbeitsfluid geeignet ist, wobei dieser dritte hydraulische Kreislauf (3) einen dritten Kondensator (31) umfasst, bei dem dieses dritte Arbeitsfluid Wärme abgibt, während es zumindest teilweise kondensiert, und wobei dieser dritte Kondensator (31) mit diesem zweiten Verdampfer (23) thermisch gekoppelt ist, um die von diesem dritten Arbeitsfluid in diesem dritten Kondensator (31) abgegebene Wärme in dieses zweite Arbeitsfluid in diesem zweiten Verdampfer (23) zu übertragen.

5. Methode zum Kühlen und/oder Erwärmen mittels eines Wärmepumpsystems (100) nach Anspruch 1, umfassend folgende Schritte:

a) Durchführung eines Wärmepumpenzyklus mit einem ersten Arbeitsfluid, das, während eines Teils des Zyklus, mindestens einer Hilfssubstanz zugeordnet ist, um damit ein Materialsystem zu bilden, wobei dieser Zyklus folgende Schritte umfasst:

a1) Trennen zumindest eines Teils dieses ersten Arbeitsfluids von diesem Materialsystem;
a2) zumindest teilweise Kondensation des ersten abgetrennten Arbeitsfluids;
a3) zumindest teilweise Verdampfung des ersten kondensierten Arbeitsfluids, und
a4) Aufnahme des ersten Arbeitsfluids, das erneut in diesem Materialsystem verdampft wurde;

b) Durchführung eines Kompressionswärmepumpenzyklus mittels eines zweiten Arbeitsfluids, wobei dieser Zyklus folgende Schritte umfasst:

b1) zumindest teilweise Kondensation des zweiten Arbeitsfluids, und
b2) zumindest teilweise Verdampfung des zweiten kondensierten Arbeitsfluids,
b3) Kompression des zweiten Arbeitsfluids unter den Kondensationsbedingungen,

umfassend folgenden Schritt:

c) Übertragen der von diesem zweiten Arbeitsfluid während des Kondensationsschrittes b1) in das Materialsystem abgegebenen Wärme, um davon zumindest einen Teil des ersten Arbeitsfluids während dieses Trennschrittes a1) zu trennen;
ferner folgende Schritte aufweisend:

Auswahl dieses Materialsystems in Form einer flüssigen Lösung;
Trennen durch Erhitzen zumindest eines Teils des ersten Arbeitsfluids von dieser flüssigen Lösung, so dass eine erstarbeitsfluidarme Lösung bzw. erstarbeitsfluidarme dampfförmige Lösung herausfließt und dieses erste dampfförmige Arbeitsfluid einem ersten Kondensator (11) zugeführt wird;
Bereitstellen einer Rückführleitung (15), um diese erstarbeitsfluidarme Lösung in diese zweite Behandlungsvorrichtung (14) zu führen, in der dieses erste dampfförmige Arbeitsfluid mit dieser erstarbeitsfluidarmen Lösung gemischt wird, um eine arbeitsfluidreiche Lösung zu erhalten; und
Bereitstellen einer Pumpe (16), um diese arbeitsfluidreiche Lösung von dieser Behandlungsvorrichtung (14) in diese erste Behandlungsvorrichtung (10) zuzuführen;

**dadurch gekennzeichnet, dass** sie folgende Schritte umfasst:
Bereitstellen dieses ersten hydraulischen Kreislaufs (1) mit einem zwischen dieser Rückführleitung (15) und dieser Pumpe (16) angeordneten regenerativen Wärmetauscher (17), um diese arbeitsfluidreiche Lösung beim Eintritt in den Generator (10) vorzuwärmen, indem Wärme aus dieser, von diesem Generator (10) abgegebenen erstarbeitsfluidarmen Lösung zurückgewonnen wird.

6. Methode nach Anspruch 5, wobei in diesem Schritt b1) dieses zweite Arbeitsfluid eine Temperatur zwischen ca. 70°C und ca. 95°C beträgt.

7. Verfahren nach Anspruch 5 oder 6, umfassend folgenden Schritt:
d) Übertragen der nach Aufnahme des ersten Arbeitsfluids in diesem Materialsystem während des Aufnahmeschrittes a4) abgegebenen Wärme in diesen zweiten Arbeitsfluid in diesem Verdampfungsschritt b2).

8. Verfahren nach Anspruch 5 oder 6, umfassend folgenden Schritt:
e) Übertragen der von diesem ersten Arbeitsfluid während des Kondensationsschrittes a2) abgegebenen Wärme in diesen zweiten Arbeitsfluid in diesem Verdampfungsschritt b2).

9. Methode nach Anspruch 8, wobei in diesem Schritt a2) dieses erste Arbeitsfluid eine Durchschnittstemperatur zwischen ca. 40 °C und ca. 70 °C beträgt.

10. Verfahren nach einem der Ansprüche 5 bis 9, umfassend folgende Schritte:

    f) Durchführung eines weiteren Kompressionswärmepumpenzyklus mittels eines dritten Arbeitsfluids, wobei dieser Zyklus den folgenden Schritt umfasst:
    f1) zumindest teilweise Kondensation des dritten Arbeitsfluids;
    g) Übertragen der von diesem dritten Arbeitsfluid während des Kondensationsschrittes f1) abgegebenen Wärme in das zweite Arbeitsfluid in diesem Verdampfungsschritt b2).

11. Methode nach Anspruch 10, wobei in diesem Schritt g) dieses dritte Arbeitsfluid eine Durchschnittstemperatur zwischen ca. 30 °C und ca. 60 °C aufweist.

12. Methode nach irgendeinem der Ansprüche von 5 bis 11, wobei dieser mit diesem ersten Arbeitsfluid durchgeführten Wärmepumpenzyklus ein Absorptionswärmepumpenzyklus ist.

13. Methode nach irgendeinem der Ansprüche von 5 bis 11, wobei dieser mit diesem ersten Arbeitsfluid durchgeführten Wärmepumpenzyklus, ein Absorptionswärmepumpenzyklus ist.

**Revendications**

1. Système de pompe à chaleur (100) comprenant :

    - un premier circuit hydraulique (1) conçu pour effectuer un cycle de pompe à chaleur avec un premier fluide de travail qui, au cours d'une partie dudit cycle, est associé avec au moins une substance auxiliaire afin de former un système de matière avec celle-ci, ledit premier circuit hydraulique (1) comprenant :

        - un premier dispositif de traitement (10) pour ledit système de matière, au niveau duquel au moins une fraction du premier fluide de travail est séparée dudit système de matière ;
        - un premier condenseur (11), au niveau duquel le premier fluide de travail qui a été séparé se condense au moins partiellement, libérant ainsi de la chaleur ;
        - un premier évaporateur (13), au niveau duquel le premier fluide de travail qui a été condensé s'évapore au moins partiellement, absorbant ainsi de la chaleur, et
        - un second dispositif de traitement (14) pour ledit système de matière, au niveau duquel le premier fluide de travail qui a été évaporé est à nouveau incorporé dans ledit système de matière ;

    - un deuxième circuit hydraulique (2) approprié pour effectuer un cycle de pompe à chaleur à compression avec un deuxième fluide de travail, ledit deuxième circuit (2) comprenant :
    - un deuxième condenseur (21), au niveau duquel ledit deuxième fluide de travail se condense au moins partiellement, libérant ainsi de la chaleur,

- un second évaporateur (23), au niveau duquel ledit deuxième fluide de travail s'évapore, absorbant ainsi de la chaleur, et
- un compresseur (25) pour compresser le deuxième fluide de travail évaporé et le ramener dans des conditions de pression et de température d'entrée dudit condenseur (21),

dans lequel ledit deuxième condenseur (21) est thermiquement couplé audit premier dispositif de traitement (10) pour transférer la chaleur libérée dudit deuxième fluide de travail au niveau dudit deuxième condenseur (21) audit premier dispositif de traitement (10) pour séparer ladite au moins une fraction du premier fluide de travail dudit système de matière ;

dans lequel ledit système de matière est une solution liquide ;

dans lequel, au niveau dudit premier dispositif de traitement (10), au moins une fraction dudit premier fluide de travail est séparée, par chauffage, de ladite solution liquide afin que sorte, à partir du générateur (10), une solution pauvre en ledit premier fluide de travail et en ledit premier fluide de travail à l'état de vapeur et dans lequel ledit premier fluide de travail à l'état de vapeur est distribué audit premier condenseur (11) ;

dans lequel ledit premier circuit hydraulique (1) comprend une conduite de recirculation (15) pour distribuer ladite solution pauvre en premier fluide de travail jusqu'au second dispositif de traitement (14) au niveau duquel ledit premier fluide de travail à l'état de vapeur est mélangé avec ladite solution pauvre en ledit premier fluide de travail afin d'obtenir une solution riche en fluide de travail ; et

dans lequel ledit premier circuit hydraulique comprend une pompe (16) pour distribuer ladite solution riche en fluide de travail dudit dispositif de traitement (14) audit premier dispositif de traitement (10) ;

**caractérisé en ce que**

ledit premier circuit hydraulique (1) comprend un échangeur de chaleur à régénération (17) agencé entre ladite conduite de recirculation (15) et ladite pompe (16) afin de préchauffer ladite solution riche en fluide de travail lorsqu'elle entre dans le générateur (10) en récupérant de la chaleur à partir de ladite solution pauvre en ledit premier fluide de travail refoulée dudit générateur (10).

2. Système de pompe à chaleur (100) selon la revendication 1, dans lequel ledit second dispositif de traitement (14) est thermiquement couplé audit second évaporateur (23) pour transférer la chaleur libérée au niveau dudit second dispositif de traitement (14) audit deuxième fluide de travail au niveau dudit second évaporateur.

3. Système de pompe à chaleur (100) selon la revendication 1, dans lequel ledit premier condenseur (11) est thermiquement couplé audit second évaporateur (23) pour transférer la chaleur libérée à partir dudit premier fluide de travail au niveau dudit premier condenseur (11) audit deuxième fluide de travail au niveau dudit second évaporateur (23).

4. Système de pompe à chaleur (100) selon l'une quelconque des revendications précédentes, comprenant un troisième circuit hydraulique (3) approprié pour effectuer un cycle de pompe à chaleur à compression avec un troisième fluide de travail, dans lequel ledit troisième circuit hydraulique (3) comprend un troisième condenseur (31), au niveau duquel ledit troisième fluide de travail libère de la chaleur tout en se condensant au moins partiellement, et dans lequel ledit troisième condenseur (31) est thermiquement couplé audit second évaporateur (23) pour transférer la chaleur libérée dudit troisième fluide de travail au niveau dudit troisième condenseur (31) audit deuxième fluide de travail au niveau dudit second évaporateur (23).

5. Procédé de refroidissement et/ou de chauffage au moyen d'un système de pompe à chaleur (100) selon la revendication 1, comprenant les étapes consistant à :

a) effectuer un cycle de pompe à chaleur avec un premier fluide de travail qui, au cours d'une partie dudit cycle, est associé avec au moins une substance auxiliaire afin de former un système de matière avec celle-ci, ledit cycle comprenant les étapes consistant à :

a1) séparer au moins une fraction dudit premier fluide de travail dudit système de matière ;
a2) condenser au moins partiellement le premier fluide de travail qui a été séparé ;
a3) évaporer au moins partiellement le premier fluide de travail qui a été condensé, et
a4) incorporer le premier fluide de travail qui a été évaporé à nouveau dans ledit système de matière ;

b) effectuer un cycle de pompe à chaleur à compression au moyen d'un deuxième fluide de travail, ledit cycle comprenant les étapes consistant à :

b1) condenser au moins partiellement ledit deuxième fluide de travail, et

b2) évaporer au moins partiellement ledit deuxième fluide de travail qui a été condensé,

b3) compresser ledit deuxième fluide de travail jusqu'à des conditions de condensation,

comprenant l'étape consistant à

c) transférer la chaleur libérée dudit deuxième fluide de travail au cours de ladite étape de condensation b1) audit système de matière pour séparer ladite au moins une fraction dudit premier fluide de travail à partir de celle-ci au cours de ladite étape de séparation a1) ;

comprenant en outre les étapes consistant à :

sélectionner ledit système de matière en tant que solution liquide ;

séparer, par chauffage, au moins une fraction dudit premier fluide de travail à partir de ladite solution liquide afin que sorte une solution pauvre en ledit premier fluide de travail et en ledit premier fluide de travail à l'état de vapeur et distribuer ledit premier fluide de travail à l'état de vapeur à un premier condenseur (11) ;

fournir une conduite de recirculation (15) pour distribuer ladite solution pauvre en premier fluide de travail jusqu'au second dispositif de traitement (14) au niveau duquel ledit premier fluide de travail à l'état de vapeur est mélangé avec ladite solution pauvre en ledit premier fluide de travail afin d'obtenir une solution riche en fluide de travail ; et

fournir une pompe (16) pour distribuer ladite solution riche en fluide de travail dudit dispositif de traitement (14) audit premier dispositif de traitement (10) ;

**caractérisé en ce qu'**il comprend les étapes consistant à :

fournir audit premier circuit hydraulique (1) un échangeur de chaleur à régénération (17) agencé entre ladite conduite de recirculation (15) et ladite pompe (16) afin de préchauffer ladite solution riche en fluide de travail lorsqu'elle entre dans le générateur (10) en récupérant de la chaleur à partir de ladite solution pauvre en ledit premier fluide de travail refoulée dudit générateur (10).

6. Procédé selon la revendication 5, dans lequel, à ladite étape b1), ledit deuxième fluide de travail possède une température entre environ 70°C et environ 95°C.

7. Procédé selon la revendication 5 ou 6, comprenant l'étape consistant à :

d) transférer la chaleur libérée lors de l'incorporation dudit premier fluide de travail dans ledit système de matière au cours de ladite étape d'incorporation a4) audit deuxième fluide de travail à ladite étape d'évaporation b2).

8. Procédé selon la revendication 5 ou 6, comprenant l'étape consistant à :

e) transférer la chaleur libérée à partir dudit premier fluide de travail au cours de ladite étape de condensation a2) audit deuxième fluide de travail à ladite étape d'évaporation b2).

9. Procédé selon la revendication 8, dans lequel, à ladite étape a2), ledit premier fluide de travail possède une température moyenne entre environ 40°C et environ 70°C.

10. Procédé selon l'une quelconque des revendications 5 à 9, comprenant les étapes consistant à :

f) effectuer un cycle de pompe à chaleur à compression supplémentaire au moyen d'un troisième fluide de travail, ledit cycle comprenant l'étape consistant à :

f1) condenser au moins partiellement ledit troisième fluide de travail ;

g) transférer la chaleur libérée dudit troisième fluide de travail au cours de ladite étape de condensation f1) audit deuxième fluide de travail à ladite étape d'évaporation b2).

11. Procédé selon la revendication 10, dans lequel, à ladite étape g), ledit troisième fluide de travail possède une température moyenne entre environ 30°C et environ 60°C.

12. Procédé selon l'une quelconque des revendications 5 à 11, dans lequel ledit cycle de pompe à chaleur effectué avec ledit premier fluide de travail est un cycle de pompe à chaleur à absorption.

13. Procédé selon l'une quelconque des revendications 5 à 11, dans lequel ledit cycle de pompe à chaleur effectué avec ledit premier fluide de travail est un cycle de pompe à chaleur à adsorption.

Fig. 1a

Fig. 1b

Fig. 2a

Fig. 2b

Fig. 3a

Fig. 3b

Fig. 4a

Fig. 4b

Fig. 5

Fig. 6

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004101035 A
- US 4471630 A
- US 4285211 A
- JP 2010243082 A